(19) Europäisches Patentamt
European Patent Office
Office européen des brevets

(11) EP 1 013 739 A1

(12) **DEMANDE DE BREVET EUROPEEN**

(43) Date de publication:
**28.06.2000 Bulletin 2000/26**

(51) Int Cl.[7]: **C09K 7/08**, E21B 43/25, E21B 43/26

(21) Numéro de dépôt: **99402826.4**

(22) Date de dépôt: **12.11.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **23.12.1998 FR 9816415**

(71) Demandeur: **INSTITUT FRANCAIS DU PETROLE**
**92500 Rueil Malmaison (FR)**

(72) Inventeurs:
- **Argillier, Jean-François**
  **92210 Saint Cloud (FR)**
- **Roche, Philippe**
  **92000 Nanterre (FR)**

(54) **Procédé de forage utilisant une composition moussante réversible**

(57) -La présente invention concerne un procédé et un système d'exploitation du sous-sol comportant au moins l'étape de circulation dans un puits d'une composition moussante de pH déterminé comportant un tensioactif ionique et un polymère polyampholyte dont la charge dépend du pH. En faisant varier le pH, on provoque la déstabilisation de la mousse de façon à "casser" plus facilement la mousse de retour à la surface et éventuellement recycler la solution moussante.

- L'invention concerne également une composition moussante à base d'eau pour la mise en oeuvre du procédé.
- Application aux opérations de forage et aux opérations de complétion des puits pétroliers nécessitant l'usage d'un fluide de puits de faible masse volumique.

EP 1 013 739 A1

## Description

L'invention concerne un procédé et un système pour la mise en oeuvre du procédé dans des puits d'exploitation souterraine pour le forage, le nettoyage ou les opérations de mise en production de ces puits dans le cas de gisement producteur. Dans le procédé, on effectue une circulation d'un fluide moussant entre la surface du sol, le fond du puits et retour à la surface, à partir d'une colonne de tubes descendue dans le puits. L'injection de la mousse se fait généralement par l'intérieur des tubes et le retour par l'espace annulaire défini par l'extérieur des tubes et les parois du puits. Le fluide sous forme de mousse entraîne les débris de forage vers la surface, nettoyant ainsi le front de taille. Cette technique, dite de forage à la mousse, est connue et présente notamment les avantages de ne pas procurer une pression hydrostatique de fond trop importante grâce à la faible masse volumique de la mousse. Cependant, cette technique a pour inconvénient de ne pas permettre facilement le recyclage de la solution moussante, compte tenu des produits initialement mis en solution pour stabiliser la mousse après agitation et injection de gaz. Le "cassage" de la mousse est donc un problème gênant pour l'application où l'on désire pouvoir récupérer la plupart des produits moussants pour une utilisation répétée, ou si les conditions d'environnement ne permettent pas l'épandage du volume de mousse de retour du puits.

On connaît le document WO-94/17154 qui propose l'utilisation d'agent moussant amphotère combiné avec d'autres tensioactifs comme base d'une composition moussante stable. La mousse est détruite par une variation appropriée du pH de la mousse. Si la mousse est basique, la mousse est cassée en diminuant le pH au moins en dessous de 4, si la mousse est acide, la mousse est cassée en augmentant le pH au moins au-dessus de 9,5.

La présente invention concerne un procédé de forage à la mousse à partir d'une solution moussante composée d'une combinaison d'au moins un tensioactif, en tant qu'agent moussant, cationique ou anionique dont la charge ne dépend que très peu du pH et d'un polymère polyampholyte dont la charge globale dépend du pH. Le polymère selon l'invention n'a pas de propriété moussante. Pour un pH déterminé de la présente solution moussante, on en optimise la fonction moussante en réglant les quantités respectives de polymère ampholyte et de tensioactif (ionique ou cationique en fonction du signe des charges du polymère dans ces conditions déterminées de pH) en prenant comme critère les charges respectives du polymère et du tensioactif. En modifiant le pH de la mousse, on modifie alors les charges du polymère ampholyte. Cela a pour conséquence que les interactions des charges entre polymère et tensioactif sont modifiées d'une façon telle que l'on peut ainsi déstabiliser la mousse, éventuellement jusqu'à sa destruction. Ainsi, il sera possible d'envisager la réutilisation de la composition moussante pour une nouvelle injection.

Le procédé et la composition selon l'invention, peuvent être avantageusement appliqués aux opérations de forage, d'interventions ou de complétions de puits pétroliers nécessitant l'usage d'un fluide de puits de densité inférieure à 1, tel une mousse.

Les polymères polyampholytes du procédé ou de la composition moussante de la présente invention sont choisis, de préférence, dans le groupe constitué par :

a) les polymères de formule générale (I) suivante:

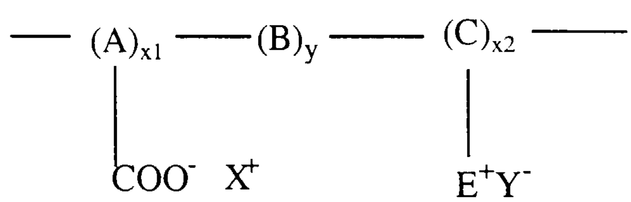

- dans laquelle A désigne un groupe résultant de la copolymérisation d'un monomère à insaturation éthylènique et portant un groupement anionique —COO$^-$,
- X$^+$ est un cation provenant de la neutralisation des groupements anioniques —COO$^-$ par une base minérale ou organique,
- B est un groupe résultant de la copolymérisation d'au moins un monomère à insaturation éthylénique hydrophile, de préférence de l'acrylamide;
- C est un groupe résultant de la copolymérisation d'un monomère à insaturation éthylènique et portant un groupement cationique E$^+$ tel que

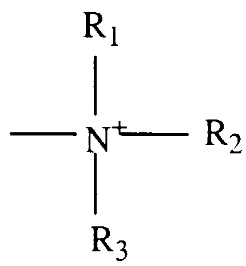

- dans laquelle R1, R2 et R3, identiques ou différents, sont hydrogène, un groupe alkyle en C1-C22, linéaire, ramifié ou cyclique (cycloaliphatique ou aromatique);
- $Y^-$ désigne un anion résultant de la neutralisation des groupes E par un acide minéral ou organique ou de la quaternisation des groupements E;
- x1, x2 et y désignent respectivement les pourcentages en moles pour les groupes A, B et C, avec x1 supérieur ou égal à x2, et x1 + x2 + y = 1;

b) les polymères bétaïniques de formule suivantes:

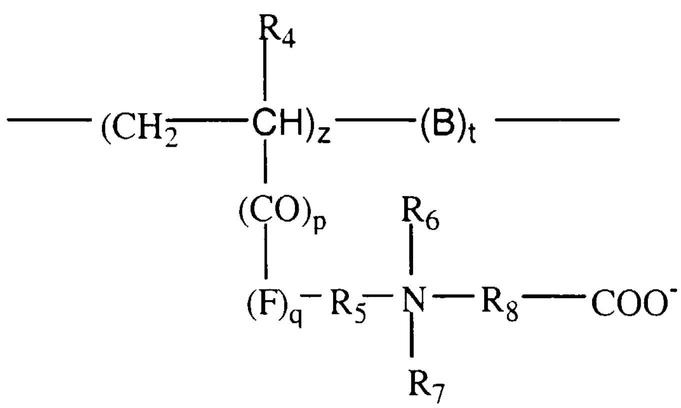

dans laquelle:

- R4, R6 et R7 , identiques ou différents, désignent un hydrogène ou un alkyle en C1-C4, linéaire ou ramifié;
- F désigne NH ou O ou forme avec le groupe R5 un cycle ou hétérocycle, aromatique ou non-aromatique en C5-C7;
- R5 et R8 désignent, indépendamment l'un de l'autre, un groupe hydrocarbonné divalent en particulier un groupe -(CH2)n- avec n entier allant de 1 à 4;
- R5 peut former avec R6 et R7 un hétérocycle en C5-C7;
- B est un groupe résultant de la copolymérisation d'au moins un monomère à insaturation éthylénique hydrophile, de préférence de l'acrylamide;
- z et t sont les pourcentages en moles des groupes , tels que z + t = 1
- p vaut 0 ou 1 et q vaut 0 ou 1.

Dans la formule générale (I) telle que définie ci-dessus, les monomères conduisant après copolymérisation aux motifs de structure:

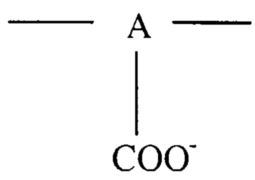

sont choisis parmi les sels d'acides carboxyliques linéaires, ramifiés ou cycliques (cycloaliphatiques ou aromatiques tels que les sels de l'acide crotonique, de l'acide acrylique, de l'acide métacrylique, de l'acide vinylbenzoïque; les sels diacides carboxyliques tels que les sels de l'acide maléïque, fumarique ou itaconique ainsi que leurs monoesters et monoacides;

- le contre ion $X^+$ associé à COO résulte en général de la neutralisation du groupe $COO^-$ par une base minérale telle que NaOH ou KOH ou une base organique telle qu'une amine ou un aminoalcool.

Dans la formule générale (I), les monomères conduisant aux motifs de structure -B- sont choisis parmi les monomères à insaturation éthylénique hydrophiles et sont choisis de telle sorte que le polymère final soit soluble dans l'eau.

Dans la formule générale (I), les monomères conduisant aux motifs de structure

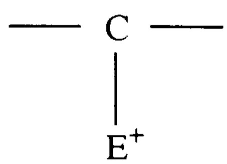

sont choisis, de préférence parmi les monomères du type acrylique, vinylique, allylique ou diallylique comportant une fonction amine tertiaire quaternisée par un halogènure d'alkyle ou un sulfate de dialkyle.

On peut citer par exemple:

- le diméthylaminoéthylacrylate,
- le diéthylaminoéthylacrylate,
- le diméthylaminopropylacrylate,
- le diméthylaminopropylacrylamide,
- le 2-vinylpyridine,
- la 4-vinylpyridine,
- la diméthylallylamine,

quaternisés par un halogénure d'alkyle ou un sulfate de dialkyle.

Les polyampholytes de formule (I) particulièrement préférés sont choisis parmi les copolymères d'acrylate de sodium, d'acrylamide et d'acryloxyéthyltrimethylammonium.

Les poids moléculaires des polyampholytes selon l'invention peuvent varier de 5000 à 10.000.000 et sont de préférence compris entre 100.000 et 2.000.000.

Comme tensioactifs combinés avec le polymère polyampholyte, il est envisageable dans la présente invention d'utiliser tous les tensioactifs anioniques classiques, tels que la fonction anionique soit:

- sulfonates:

  ¤ Alkylbenzènesulfonates,
  ¤ Paraffinesulfonates,
  ¤ $\alpha$-oléfinesulfonates,
  ¤ Les pétroleumsulfonates,
  ¤ Les lignosulfonates,
  ¤ Les dérivés sulfosucciniques,
  ¤ Polynaphtylméthanesulfonates,
  ¤ Alkyltaurides.

- sulfates:

  ¤ Alkylsulfates,
  ¤ Alkyléthersulfates,

- phosphates:

- Les phosphates de monoalkyles,
- Les phosphates de dialkyles

- phosphonates:

Comme tensioactifs cationiques, on peut citer:

- les sels d'ammonium quaternaire dont l'azote:
  - comporte une chaîne grasse, par exemple, les dérivés d'alkyltriméthyl ou triéthyl ammonium, les dérivés d'alkyldiméthyl benzylammonium,
  - comporte deux chaînes grasses,
  - fait partie d'un hétérocycle, par exemple, les dérivés du pyridinium, d'imidazolinium, de quinolinium, de pipéridinium, de morpholinium.

La présente invention sera mieux comprise et ses avantages apparaîtront plus nettement à la lecture des essais, nullement limitatifs, décrits ci-après.

Les essais sont fondés principalement sur la comparaison des mesures suivantes, effectuées sur la solution moussante ou sur la mousse formée à partir de ladite solution moussante:

- la vitesse de drainage VD, qui permet de caractériser la stabilité de la mousse formée, en fonction du pH,
- la viscosité $\mu$ (mPa.s) de la solution moussante, pour vérifier que l'augmentation de la vitesse de drainage n'est pas principalement due à une variation de la viscosité de la solution moussante.

<u>Mode opératoire:</u>

La solution moussante est constituée par :

- un polyampholyte AM/AA/ADAME, c'est à dire acrylamide/acide acrylique/chlorure d'acryl oxyéthyl triméthyl ammonium, respectivement à 85%, 10%, 5% en moles, solubilisé dans l'eau,
- au moins un tensioactif ionique, du type SDS (sodium dodécyl sulfate) ou DoTAB (dodécyl tri methylammonium bromide).

Le polyampholyte A, de plus faible masse moléculaire, est caractérisé par une viscosité Brookfield de 4500 cP pour une solution à 20% dans l'eau, alors que le polyampholyte B, de plus forte masse, a une viscosité Brookfield de 8500 cP pour une solution à 20% dans l'eau.

La mousse est obtenue à partir de 200 ml de solution moussante par agitation à l'aide d'un fouet. La vitesse de rotation est d'environ 2000 tours/minute. On note VM le volume de mousse formée. En règle générale, le temps d'agitation est d'environ 2 minutes, ce qui suffit pour obtenir une mousse homogène, ainsi qu'un volume maximal.

Pour mesurer la vitesse de drainage, caractéristique de la stabilité de la mousse, on verse la mousse obtenue dans un entonnoir en verre gradué et on note en fonction du temps le volume de solution drainée. La stabilité de la mousse est caractérisée par sa vitesse de drainage VD. La vitesse de drainage est définie à partir de l'équation empirique qui décrit le volume drainé V en fonction du temps (Bikerman, J.J., 1973):

$$V=V_o(1-\exp(-kt))$$

V : le volume drainé ($cm^3$)
$V_o$ : le volume de solution moussante ($cm^3$)
t :temps (min.)

$$VD = kV_0/2 \qquad (cm^3/min.)$$

T1/2 est le temps de "demi-vie", c'est à dire le temps pour lequel un volume égal à V0/2 est drainé.

Une faible valeur de VD indique que la mousse est stable.

• <u>Exemple 1:</u> Influence du pH sur la stabilité de la mousse (système SDS et polyampholyte A)

La solution moussante est constituée d'une solution d'eau bi distillée dans laquelle est ajoutée du SDS à 8.3 $10^{-4}$ mol/l (soit la concentration micellaire critique cmc sur 10) et du polyampholyte AM/AA/ADAME (85/10/5, pourcentages en moles) à 1.28 g/l. Notons que ces concentrations respectives correspondent approximativement à une égalité entre les charges négatives amenées par le tensioactif et les charges positives amenées par le polymère.

| PH | 2.1 | 3.1 | 6.1 | 8 | 10 | 12.3 |
|---|---|---|---|---|---|---|
| VM (ml) | 1400 | 1500 | 1600 | 1500 | 1450 | 1500 |
| VD (cm3/min) | 6.9 | 6.5 | 6.3 | 10.3 | 21 | 23.2 |

Ces résultats montrent que la mousse est moins stable à pH basique qu'elle ne l'est à un pH inférieur à 6. Pour une mousse à pH environ 8, l'augmentation du pH (10 à 12) permet de déstabiliser la mousse. En effet, pour ces valeurs, la vitesse de drainage est plus importante.

• <u>Exemple 2 :</u> Influence de la concentration en tensioactif (système SDS et polyampholyte A)

La concentration en tensioactif SDS est variable et exprimée par son rapport avec la concentration de CMC égale à 8.3 10-3 mol/l. La concentration en polyampholyte (C polym. exprimée en grammes par litre) est calculée de telle manière qu'il y ait environ équivalence des charges négatives amenées par le tensioactif avec celles positives amenées par le polymère.

| C tensioact. | ½0 | 1/20 | 1/10 | 1/10 | 1/5 | 1/5 | 1/2 | 1/2 | 1 | 1 |
|---|---|---|---|---|---|---|---|---|---|---|
| C polym. | 0 | 0.64 | 0 | 1.28 | 0 | 2.56 | 0 | 6.40 | 0 | 12.8 |
| VM pH=3 | 0 | 900 | 700 | 1600 | 1500 | 1700 | 1800 | 1800 | 2000 | 1700 |
| VD pH=3 | | 9.3 | | 6.4 | 43 | 4.5 | 22.3 | 3.5 | 21.4 | 2.7 |
| T1/2 pH=3 | | 7.5 | <1.5 | 14.6 | 2.4 | 18.3 | 5.5 | 22.3 | 7 | 34.1 |
| VM pH=12 | 1250 | 1000 | 1500 | 1500 | 1700 | 1650 | 1900 | 1900 | 2000 | 1800 |
| VD pH=12 | 32.8 | 29.4 | | 23.6 | 25.6 | 17.2 | 22.1 | 19.1 | 21.2 | 13.8 |
| T1/2 pH=12 | 3.1 | 3.3 | 3.5 | 5.3 | 5.0 | 8.2 | 6.1 | 9.5 | 7.1 | 11.4 |
| nota: T1/2 = 3.5, par exemple, signifie 3 minutes et 50 secondes. | | | | | | | | | | |

Ces résultats montrent, d'une part que la présence de polymère permet de former de la mousse à pH=3 avec des concentrations en tensioactifs faibles (par exemple à 1/20 de cmc), ce qui n'est pas le cas en l'absence de polymère. D'autre part, en présence de polymère A, la mousse est toujours plus stable à pH acide qu'à pH basique. Notons qu'en l'absence de polymère, et à des concentrations en tensioactifs supérieures ou égales à la cmc/2, la mousse formée avec le tensioactif a une stabilité constante de pH=3 à pH=12.

• <u>Exemple 3:</u> Influence de la concentration en polymère A:

La concentration en SDS est de 8.3 10-4 mol/l (cmc/10). La concentration en polymère ampholyte A est variable et est exprimée par rapport à l'équivalence de charge (i.e 1,28 g/l).

| Ceq | 0 | 0.1 | 0.5 | 1 | 2 |
|---|---|---|---|---|---|
| VM pH=3 | 700 | 1500 | 1600 | 1600 | 1600 |
| VD pH=3 | | | 7.9 | 6.4 | 4.8 |
| T1/2 pH=3 | <1 | <1 | 11.5 | 14.6 | 21.1 |
| Viscosité | 0.96 | 0.98 | 0.99 | 1.1 | 1.4 |
| | | | | | |
| VM pH=12 | 1500 | 1600 | 1700 | 1500 | 1600 |

(suite)

| | | | | | |
|---|---|---|---|---|---|
| VD pH=12 | 31.8 | 27.1 | 26 | 24 | 18 |
| T1/2 pH=12 | 3.5 | 4.2 | 4.4 | 5.3 | 7.4 |
| Viscosité | 0.97 | 1.0 | 1.1 | 1.4 | 1.6 |
| (Viscosité en mPa.s) | | | | | |

Ceq est la concentration en polymère par rapport à l'équivalence de charge. Ceq=1 correspond à une concentration en polymère égale à 1,28 g/l.

On note qu'en l'absence de polymère, et à cette faible concentration en tensioactif, très peu de mousse peut être formée avec nos conditions d'agitation. La mousse ainsi formée est très peu stable. On constate d'autre part que la mousse est plus stable à pH=3 qu'à pH=12 avec ajout de polymère ampholyte.

• Exemple 4: Influence de l'addition de soude sur une mousse formée à pH=6:

Sur une mousse formée à pH=6, on ajoute 11,2 cm3 de soude 0,2 N de telle sorte que le pH soit voisin de 12. La comparaison des propriétés de la mousse avant et après modification du pH est indiquée ci-dessous. La concentration en SDS est de 8.3 10-4 mol/l et la concentration en polyampholyte est de 1.28 g/l.

| *pH=6 (initial) | | *pH=12 (après ajout de la soude) | |
|---|---|---|---|
| VM (ml) | 1800 | VM (ml) | 1700 |
| VD (cm3/min) | 7.1 | VD (cm3/min) | 18 |
| T1/2 (min) | 12.4 | T1/2 (min) | 5.3 |

Ces essais montrent que, dans cet exemple, l'addition de soude à partir d'une mousse formée à pH=6 permet de déstabiliser la mousse initiale et de retrouver la vitesse de drainage d'une mousse formée à pH=12.

• Exemple 5: Cas d'un tensioactif cationique tel que le DoTAB, influence du pH:

Le tensioactif est du DOTAB. Le polyampholyte A est toujours le copolymère AM/AA/ADAME (85/10/5, pourcentages en moles). La concentration en tensioactif est de 7,5 10-3 mol/l, soit environ la cmc/2 et la concentration en polymère est de 2,32 g/l, ce qui correspond à peu près à un cinquième de charges négatives amenées par le polymère par rapport aux charges positives amenées par le tensioactif.

| | DOTAB pur | DOTAB/polymère (0.2 eq) |
|---|---|---|
| T1/2 pH=3 | 3 min. 50 s | 2 min 50 s |
| T1/2 pH=12 | <40 s | 9 min 30 s |
| VD pH=3 | 33.5 | 62 |
| VD pH=12 | | 10.7 |
| Vol (cm3) pH=3 | 1600 | 1500 |
| Vol (cm3) pH=12 | 1450 | 1500 |

Ces résultats montrent que dans cet exemple en présence de polymère la mousse est plus stable à pH=12 qu'à pH=3. C'est le cas inverse de l'exemple 1. Notons qu'en l'absence de polymère et à cette concentration en tensioactif, la mousse est peu stable, en particulier à pH=12. On met ainsi en évidence qu'en diminuant le pH on peut déstabiliser une mousse formée à pH basique.

• Exemple 6: Influence de la présence de sels (polymère A):

La solution moussante est constituée d'une solution d'eau bidistillée dans laquelle est ajoutée du SDS à 8,3 10-4 mol/l (soit la concentration de cmc/10) et éventuellement du polyampholyte AM/AA/ADAME (85/10/5, pourcentages en mole) à 1,28 g/l ainsi que du NaCl à la concentration indiquée.

| C polymère (g/l) | 0 | 0 | 0 | 1.28 | 1.28 | 1.28 |
|---|---|---|---|---|---|---|
| C NaCl (mol/l) | 0 | 0.01 | 0.1 | 0 | 0.01 | 0.1 |
| VM pH=3 | 700 | 1600 | 1250 | 1600 | 1600 | 1300 |
| VD pH=3 | | 38.1 | 25.1 | 6.4 | 6.2 | 6.3 |
| T1/2 pH=3 | <1.5 | 3.1 | 3.3 | 14.6 | 15.5 | 16.1 |
| VM pH=12 | 1500 | 1700 | 1400 | 1500 | 1500 | 1550 |
| VD pH=12 | 31.8 | 32.3 | 25.5 | 23.6 | 31.9 | 29.4 |
| T1/2 pH=12 | 3.5 | 4.1 | 4.1 | 5.3 | 4.2 | 4.1 |

nota: T1/2 = 3.5, par exemple, signifie 3 minutes et 50 secondes.

Ces résultats montrent qu'en présence de polymère, la mousse reste plus stable à pH=3 qu'à pH=12, même en présence de NaCl pouvant atteindre des concentrations égales à 0.1 mol/l.

Exemple 7: Influence de la masse moléculaire du polyampholyte: comparaison entre le polymère A et le polymère B:

| | DOTAB pur | DOTAB/polymère A (0.2 eq) | DOTAB/polymère B (0.2 eq) |
|---|---|---|---|
| T1/2 pH=3 | 3 min. 50 s | 2 min 50 s | <54 s |
| T1/2 pH=12 | <40 s | 9 min 30 s | 12 min 40 s |
| VD pH=3 | 33.5 | 62 | |
| VD pH=12 | | 10.7 | 8.1 |
| VM (cm3) pH=3 | 1600 | 1500 | 1300 |
| VM (cm3) pH=12 | 1450 | 1500 | 1500 |

Cet essai a été effectué dans les mêmes conditions que l'exemple 5, dont les résultats sont reproduits dans les deux premières colonnes.

Avec le polymère de plus forte masse moléculaire, à pH=3 la mousse est plus instable, alors qu'à pH=12 la mousse est plus stable, en comparaison avec le polymère de plus petite masse moléculaire.

## Revendications

**1.** Procédé de circulation d'une mousse aqueuse dans un puits foré, dans lequel on effectue les étapes suivantes:

- on forme une mousse à partir d'une composition aqueuse ayant un pH déterminé et comportant au moins un tensioactif ionique dont la charge ne dépend pratiquement pas du pH et un polymère polyampholyte dont la charge globale dépend du pH, choisis dans le groupe constitué par:

  a) les polymères de formule générale (I) suivante:

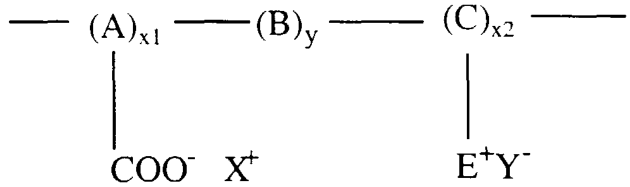

  - dans laquelle A désigne un groupe résultant de la copolymérisation d'un monomère à insaturation éthylènique et portant un groupement anionique -COO-,

- $X^+$ est un cation provenant de la neutralisation des groupements anioniques -COO- par une base minérale ou organique,
- B est un groupe résultant de la copolymérisation d'au moins un monomère à insaturation éthylénique hydrophile, de préférence de l'acrylamide;
- C est un groupe résultant de la copolymérisation d'un monomère à insaturation éthylènique et portant un groupement cationique E+ tel que

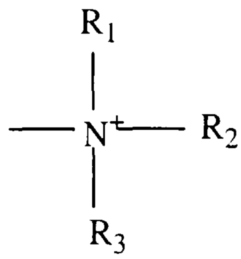

- dans laquelle R1, R2 et R3, identiques ou différents, sont hydrogène, un groupe alkyle en C1-C22, linéaire, ramifié ou cyclique (cycloaliphatique ou aromatique);
- $Y^-$ désigne un anion résultant de la neutralisation des groupes E par un acide minéral ou organique ou de la quaternisation des groupements E;
- x1, x2 et y désignent respectivement les pourcentages en moles pour les groupes A, B et C, avec x1 supérieur ou égal à x2, et x1 + x2 + y = 1;

b) les polymères bétaïniques de formule suivantes:

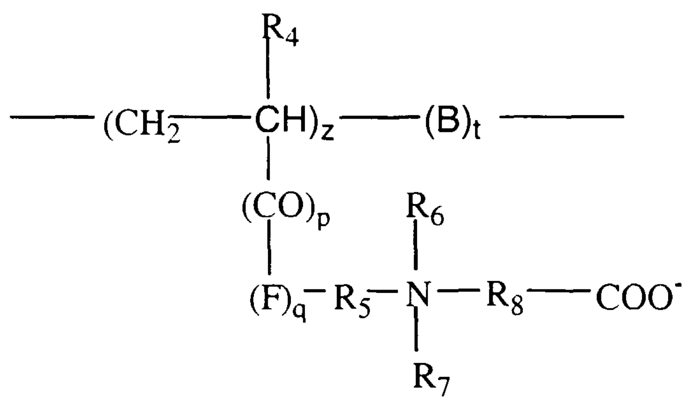

dans laquelle:

- R4, R6 et R7 , identiques ou différents, désignent un hydrogène ou un alkyle en C1-C4, linéaire ou ramifié;
- F désigne NH ou O ou forme avec le groupe R5 un cycle ou hétérocycle, aromatique ou non-aromatique en C5-C7;
- R5 et R8 désignent, indépendamment l'un de l'autre, un groupe hydrocarbonné divalent en particulier un groupe -(CH2)n- avec n entier allant de 1 à 4;
- R5 peut former avec R6 et R7 un hétérocycle en C5-C7;
- B est un groupe résultant de la copolymérisation d'au moins un monomère à insaturation éthylénique hydrophile, de préférence de l'acrylamide;
- z et t sont les pourcentages en moles des groupes, tels que z + t =1
- p vaut 0 ou 1 et q vaut 0 ou 1;

♦ on injecte ladite mousse dans le puits, ladite mousse circulant de la surface vers le fond du puits, puis du fond

vers la surface,

- ♦ on modifie le pH de la mousse qui est remontée à la surface de façon à modifier la charge du polymère afin de déstabiliser la mousse.

**2.** Procédé selon la revendication 1, dans lequel la masse moléculaire dudit polymère polyampholyte est comprise entre 5000 et 10000000 et de préférence comprise entre 100000 et 2000000.

**3.** Procédé selon l'une des revendications 1 ou 2, dans lequel la quantité de polymère relativement à la quantité de tensioactif est ajustée en fonction des charges apportées par le polymère et le tensioactif.

**4.** Procédé selon l'une des revendications 1 à 3, dans lequel le polymère est AM/AA/ADAME.

**5.** Procédé selon l'une des revendications 1 à 4, dans lequel le tensioactif est choisi dans le groupe constitué par le SDS et le DoTAB.

**6.** Procédé selon l'une des revendications 4 ou 5, dans lequel le polymère AM/AA/ADAME est respectivement à 85%, 10% et 5% en moles.

**7.** Application du procédé selon l'une des revendications précédentes aux opérations de forage, d'interventions ou de complétions de puits pétroliers nécessitant l'usage d'un fluide de puits de densité inférieure à 1.

Office européen des brevets

# RAPPORT DE RECHERCHE EUROPEENNE

Numéro de la demande
EP 99 40 2826

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | FR 2 757 426 A (INSTITUT FRANCAIS DU PETROLE) 26 juin 1998 (1998-06-26)<br>* page 7, ligne 15 - page 15, ligne 18 * | 1,4,5 | C09K7/08<br>E21B43/25<br>E21B43/26 |
| Y | US 5 609 862 A (S.T.CHEN) 11 mars 1997 (1997-03-11)<br>* colonne 5, ligne 10 - colonne 7, ligne 36 *<br>* colonne 9, ligne 10 - ligne 17; revendications 1,3,6,9,16,18 * | 1,4,5 | |
| Y | WO 95 14066 A (CLEARWATER INC.) 26 mai 1995 (1995-05-26)<br>* page 3, ligne 31 - page 4, ligne 33; tableaux II,III *<br>* revendications 1,7,11 * | 1,4,5 | |
| Y | EP 0 371 616 A (HALLIBURTON COMPANY) 6 juin 1990 (1990-06-06)<br>* page 2, ligne 51 - page 3, ligne 56 * | 1,4,5 | **DOMAINES TECHNIQUES RECHERCHES (Int.Cl.7)** |
| A | WO 97 21022 A (MARATHON OIL) 12 juin 1997 (1997-06-12)<br>* page 5, ligne 24 - page 6, ligne 19 *<br>* page 8, ligne 20 - page 9, ligne 34 * | 1 | C09K<br>E21B |

Le présent rapport a été établi pour toutes les revendications

| Lieu de la recherche | Date d'achèvement de la recherche | Examinateur |
|---|---|---|
| LA HAYE | 19 janvier 2000 | Boulon, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 99 40 2826

La présente annexe indique les membres de la famille de brevets relatifs aux documents brevets cités dans le rapport de recherche européenne visé ci–dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

19-01-2000

| Document brevet cité au rapport de recherche | Date de publication | Membre(s) de la famille de brevet(s) | Date de publication |
|---|---|---|---|
| FR 2757426 A | 26-06-1998 | AU 7736598 A | 15-07-1998 |
| | | CA 2246382 A | 25-06-1998 |
| | | EP 0900124 A | 10-03-1999 |
| | | WO 9826864 A | 25-06-1998 |
| US 5609862 A | 11-03-1997 | AT 160933 T | 15-12-1997 |
| | | AU 1863692 A | 07-01-1993 |
| | | AU 3293495 A | 07-12-1995 |
| | | CA 2072185 A | 29-12-1992 |
| | | DE 69223459 D | 22-01-1998 |
| | | DE 69223459 T | 20-05-1998 |
| | | EP 0521666 A | 07-01-1993 |
| | | ES 2109317 T | 16-01-1998 |
| | | GR 3025721 T | 31-03-1998 |
| | | JP 2061051 C | 10-06-1996 |
| | | JP 5246828 A | 24-09-1993 |
| | | JP 7088289 B | 27-09-1995 |
| | | MX 9203489 A | 01-03-1993 |
| | | NZ 243273 A | 24-02-1995 |
| WO 9514066 A | 26-05-1995 | CA 2151152 A | 26-05-1995 |
| | | DE 69417015 D | 15-04-1999 |
| | | DE 69417015 T | 01-07-1999 |
| | | EP 0680504 A | 08-11-1995 |
| | | US 5607902 A | 04-03-1997 |
| EP 371616 A | 06-06-1990 | US 4959163 A | 25-09-1990 |
| | | NO 894357 A | 04-05-1990 |
| WO 9721022 A | 12-06-1997 | US 5711376 A | 27-01-1998 |
| | | AU 7601996 A | 27-06-1997 |
| | | CA 2234546 A | 12-06-1997 |
| | | GB 2322891 A,B | 09-09-1998 |
| | | NO 982602 A | 05-08-1998 |

EPO FORM P0460

Pour tout renseignement concernant cette annexe : voir Journal Officiel de l'Office européen des brevets, No.12/82